# EUROPÄISCHE PATENTSCHRIFT

(11) **EP 2 773 938 B1**
(45) Veröffentlichungstag und Bekanntmachung des Hinweises auf die Patenterteilung: **09.03.2016**
(21) Anmeldenummer: 12783569.2
(22) Anmeldetag: 31.10.2012
(51) Int. Cl.: G01M 9/04, G01M 9/06, G01M 17/007

(54) **WINDKANALWAAGE**
WIND TUNNEL BALANCE
BALANCE AÉRODYNAMIQUE

(30) Priorität: 02.11.2011 DE 102011085640
(43) Veröffentlichungstag der Anmeldung: 10.09.2014
(73) Patentinhaber: MAHA-AIP GmbH & Co. KG, 87490 Haldenwang (DE)
(72) Erfinder: KNESTEL, Anton, 87496 Hopferbach (DE); HARTMANN, Christian, 87452 Altusried (DE); BECHERER, Thomas, 87463 Dietmannsried (DE)
(74) Vertreter: MERH-IP Matias Erny Reichl Hoffmann Patentanwälte PartG mbB
(86) Internationale Anmeldenummer: PCT/EP2012/071536
(87) Internationale Veröffentlichungsnummer: WO 2013/064525

(56) Entgegenhaltungen:
- EP-A1- 1 656 541
- DE-A1-102008 013 885
- DE-A1-102008 032 380
- DE-A1-102008 036 315

## Beschreibung

Die vorliegende Erfindung betrifft eine Windkanalwaage, die hochgenaue Messungen ermöglicht, insbesondere können mittels der erfindungsgemäßen Windkanalwaage parasitäre Kräfte in z-Richtung, die z.B. durch eine Fehl-Fixierung des Fahrzeugs auf einem Laufband erzeugt werden, separat erfasst werden. Weiterhin werden die auf einer Plattform lastenden Gewichtskräfte minimiert, so dass die Messgenauigkeit erhöht wird. Dies kann dadurch erreicht werden, dass die Plattform der Windkanalwaage relativ bewegbar zu einem Rahmen gelagert ist, wobei sich die Gewichtskraft einer Bandeinheit und eines darauf aufstehenden (Kraft-)Fahrzeugs gegen den Rahmen abstützt.

Zur Messung von Kräften, die bei aerodynamischen Versuchen in einem Windkanal auf ein Kraftfahrzeug wirken, sind unterschiedliche Versuchsstandanordnungen bzw. Prüfstände bekannt, z.B. Einband-, Dreiband-oder Fünfbandsysteme. Das Koordinatensystem ist derart gewählt, dass die x-Achse in die Laufrichtung eines Laufbandes des Prüfstandes zeigt. Die y-Achse steht quer zum Laufband. Die z-Achse zeigt ausgehend von der Oberfläche eines Obertrums des Laufbandes weg vom Laufband (s. Koordinatensystem in den Figuren).

Einbandsysteme weisen eine Bandeinheit mit einem breiten durchgehenden Laufband auf, das auf zwei Rollen bzw. Trommeln umläuft. Das Kraftfahrzeug wird für aerodynamische Versuche mit allen Rädern auf dem einen Laufband positioniert und relativ dazu fixiert. Dazu werden beispielsweise Fixiereinrichtungen verwendet, die seitlich zum Laufband angeordnet sind. Die Räder werden von Lagern (Wiegepads), die unterhalb des Obertrums des Laufbandes zwischen den Rollen angeordnet sind, gestützt. Die Wiegepads sind in der Regel an eine Messsensorik angeschlossen, so dass beispielsweise Kräfte in z-Richtung, z.B. die Gewichtskraft des Kraftfahrzeuges und Auf- bzw. Abtriebskräfte, ermittelt werden können. Die Kräfte in z-Richtung werden folglich durch das Laufband hindurch gemessen. Man spricht in diesem Zusammenhang von einer Durchbandmessung.

Die Durchbandmessung findet auch bei Dreiband-, Fünfband- und Siebenbandsystemen Anwendung. Bei Dreibandprüfständen stehen die Reifen des Kraftfahrzeuges auf schmaleren Seitenbandeinheiten auf. Zur Simulation der Fahrfläche läuft zwischen den Laufbändern der seitlichen Bandeinheiten ein sogenanntes Mittenband. Die Durchbandmessung erfolgt an den beiden seitlichen Bandeinheiten. Bei einer Fünfbandversuchsstandanordnung sind eine Mittenbandeinheit und seitlich dazu vier kleinere Bandeinheiten vorgesehen. Gewöhnlich wird ein Kraftfahrzeug auf die vier seitlichen Bandeinheiten aufgestellt und die Bandeinheiten selbst werden gewogen. In diesem Fall findet die Durchbandmessung häufig keine Anwendung, sie ist jedoch möglich. Bei Fünfbandsystemen wird die Durchbandmessung insbesondere herangezogen, wenn die Spurbreite eines Fahrzeuges kleiner oder gleich der Breite des Mittenbandes ist und das Kraftfahrzeug lediglich auf dem Mittenband aufsteht.

Bei bekannten Windkanalwaagen kann die Messung der aerodynamischen Kräfte, die auf ein (Kraft-)Fahrzeug wirken, wenn es auf der Windkanalwaage geprüft wird, durch parasitäre Kräfte verfälscht werden. Diese parasitären Kräfte werden u.a. durch einen Schräglauf der Räder des Fahrzeuges, eine ungenaue Fixierung des Fahrzeugs auf dem Laufband oder durch sogenannte Walk- und/oder Rollkräfte verursacht. Parasitäre Kräfte in z-Richtung werden beispielsweise dadurch erzeugt, dass Halteseile eines Restrainsystems (Befestigungseinrichtung), das das Fahrzeug auf dem Laufband in Position hält, nicht parallel zur Horizontalen ausgerichtet sind und dadurch eine parasitäre (Schein-)Kraft generieren, die von den Wiegepads erfasst wird. Herkömmliche Windkanalwaagen können diese parasitären Kräfte nicht gesondert erfassen
oder nur mit einem beachtlichen Zusatzaufwand, was zu weiteren Messungenauigkeiten führen kann.

Im Hinblick auf die Thematik der parasitären Kräfte schlägt die EP 1 656 541 vor, dass ein Windkanalversuchsstand mit einem einzigen Laufband insgesamt auf einer einzigen, gegenüber einem ortsfesten Bezugssystem verschiebbar gelagerten Waagenplatte angeordnet ist. Mittels Bewegungen der Waagenplatte gegenüber dem ortsfesten Bezugssystem werden aerodynamische Kräfte erfasst. Die parasitären Kräfte in x-, y- und z-Richtung treten bei dieser Anordnung als innere Kräfte auf, so dass diese weder anzeigbar noch separat erfassbar sind. Somit ist ein Nachteil des Versuchsstands gemäß der EP 1 656 541, dass parasitäre (Schein-)Kräfte, die z.B. durch die Fahrzeugfixierung erzeugt werden, nicht auf einfache Weise anzeigbar bzw. nicht separat zu den aerodynamischen Kräften (die durch aerodynamischen Auftrieb bzw. Abtrieb und das Fahrzeuggewicht erzeugt werden) in z-Richtung erfasst werden können. Dies kann zu Verfälschungen der Messwerte führen. Weiter ermöglicht die Vorrichtung gemäß der EP 1 656 541 nicht, dass Ventilationsverluste der Fahrzeugräder separat (isoliert) erfasst werden können. Weiter ist nachteilig, dass die Windkanalwaage gemäß der EP 1 656 541 mit dem vollen Gewicht auf der einzigen Waagenplatte aufsteht, die auch gleichzeitig zum Erfassen der Kräfte herangezogen wird. Durch das hohe Gewicht, das somit auf der Waagenplatte aufsteht, kann die Messgenauigkeit eingeschränkt sein.

Zudem bezieht sich DE 10 2008 032 380 A1 auf einen Windkanal-Prüfstand für Fahrzeuge mit einer Windkanalwaage, einer Antriebseinheit für Fahrzeugräder und mit der Fesselung und Abstützung des Fahrzeuges dienenden Stützeinheiten. Jede Stützeinheit ist dergestalt ausgebildet, dass sie das Fahrzeug in Fahrtrichtung und quer dazu (X-, Y-Richtung) arretiert, in Vertikalrichtung (Z-Richtung) hingegen eine ungehinderte Fahzeugbewegung zu lässt.

In DE 10 2008 013 885 A1 wird ein Verfahren zur Bestimmung von auf ein Kraftfahrzeug in einem Windkanal unter Windströmung einwirkenden Vertikalkräften beschrieben. Zur Bestimmung der schädlichen Vertikalkräfte Fvert,schädlich bzw. zur direkten Messung der korrekten Vertikalkräfte werden die Räder von der Karosserie entkoppelt. Diese werden jeweils über externe Radaufnahmen von außen geführt.

In DE 10 2008 036 315 A1 wird ein Versuchsstand für aerodynamische Messungen an Fahrzeugen beschrieben. Dieser hat ein sich zwischen den Vorder- und Hinterrädern eines Fahrzeugs erstreckendes Mittenlaufband zum Simulieren eines sich unter dem Fahrzeug zwischen dessen Rädern bewegenden mittleren Fahrbahnbereichs, eine Aufstandsfläche zum Aufnehmen des Fahrzeuggewichts, zwei Radantriebseinheiten zum Antreiben jeweils eines Rades beidseits des Mittenlaufbandes und eine Messeinrichtung.

Es ist die Aufgabe der vorliegenden Erfindung, eine Windkanalwaage zu schaffen, die eine erhöhte Messgenauigkeit aufweist.

Eine erfindungsgemäße Windkanalwaage kann zumindest eine Bandeinheit umfassen. Die Bandeinheit kann aufweisen zumindest einen Bandeinheitsrahmen, an dem zumindest ein Laufband angeordnet sein kann, das um zumindest zwei Rollen geschlungen sein kann.

Ferner kann die Windkanalwaage zumindest eine Befestigungseinrichtung umfassen, die dazu geeignet sein kann, ein Fahrzeug in einer vorbestimmten Position relativ zum Laufband festzuhalten.

Weiterhin können ein Rahmen und eine Plattform von der Windkanalwaage umfasst sein. Die Plattform kann relativ bewegbar zum Rahmen gelagert sein. Es können Kraftmessmittel zwischen der Plattform und dem Rahmen angeordnet sein, mit denen Kräfte zwischen dem Rahmen und der Plattform (resultierend von Kräften, die auf das Fahrzeug bzw. auf die Bandeinheit bzw. auf das Laufband wirken) erfassbar sind.

Die Befestigungseinrichtung kann mit der Plattform in Verbindung stehen.

Ferner kann die zumindest eine Bandeinheit im Wesentlichen reibungsfrei auf dem Rahmen gelagert sein. Die Plattform kann mit der zumindest einen Bandeinheit mittels zumindest eines Verbindungslagers derart gekoppelt sein, dass Kräfte in x- und/oder y-Richtung von der Bandeinheit auf die Plattform übertragbar sein können. Außerdem kann das Verbindungslager die Plattform und die Bandeinheit in z-Richtung im Wesentlichen reibungsfrei verbinden.

Die erfindungsgemäße Windkanalwaage erlaubt eine erhöhte Messgenauigkeit. Das Gewicht der Bandeinheit und des Kraftfahrzeuges lagert auf dem Rahmen und nicht auf der Plattform, so dass die Plattform und die daran angeordneten Kraftmessmittel weniger belastet sind. Dies erhöht die Messsensitivität bzw. Messgenauigkeit und erlaubt, dass die mittlerweile gestellten Anforderungen von ca. 1N Messsensitivität bzw. -genauigkeit erreicht werden. Zusätzlich wird die Messgenauigkeit dadurch erhöht, dass parasitäre Kräfte in z-Richtung separat mittels Z-Kraftmessmitteln, die zwischen der Plattform und dem Rahmen angeordnet sind, erfasst werden können.

Der Begriff Bandeinheitsrahmen kann beispielsweise alle Bauteile, die das Grundgerüst bilden, an dem z.B. die Rollen der Bandeinheit und das Laufband angeordnet sein können, umfassen. Der Bandeinheitsrahmen kann einteilig oder mehrteilig sein.

Typischerweise kann jeweils eine Bandeinheit im Wesentlichen einen Bandeinheitsrahmen, ein Laufband und zwei Rollen umfassen. Es können weitere Bandeinheitskomponenten hinzukommen, wie z.B. ein Antriebsmittel zum Antreiben des Laufbandes, Hydrauliksysteme, Elektrik, etc, die hier nicht weiter thematisiert werden.

Die Befestigungseinrichtung (Restraintsystem) kann beispielsweise aus zwei Befestigungsstützen bzw. -stangen (erste Befestigungsmittel) bestehen, die jeweils seitlich des Laufbandes angeordnet sein können, und ferner Haltemittel (zweite Befestigungsmittel), wie z.B. Seile, Bänder, Gurte, Stangen und/oder Kombinationen davon, umfassen können, die an den Befestigungsstützen angeordnet sein können und weiterhin bspw. mittels Schwellerstützen an entsprechenden Aufnahmen am Kraftfahrzeugrahmen angeordnet sein können.

Festhalten des Fahrzeugs auf dem Laufband bedeutet, dass das Fahrzeug während der Aerodynamikversuche oder anderer Versuche seine vorbestimmte Position auf dem Laufband beibehält, d.h. nicht von dieser Position abweicht.

Die feste Anordnung der Befestigungseinrichtung auf der Plattform kann beispielsweise kraft- und/oder formschlüssig realisiert sein.

Im Wesentlichen reibungsfrei soll bedeuten, dass die Lagerung soweit wie technisch möglich von Reibungskräften in der angegebenen Richtung frei ist. Das Verbindungslager überträgt z.B. in z-Richtung (im Wesentlichen) keine Kräfte, da die Lagerung in z-Richtung im Wesentlichen reibungsfrei ist.

Das Verbindungslager koppelt bzw. verbindet die Bandeinheit und die Plattform. Dabei kann das Verbindungslager bevorzugt an dem Bandeinheitsrahmen angeordnet sein.

Weiterhin kann die Bandeinheit mittels einer schwimmenden Lagerung auf dem Rahmen im Wesentlichen reibungsfrei gelagert sein.

Eine schwimmende Lagerung bedeutet beispielsweise, dass Kräfte in z-Richtung vom Lager aufgenommen werden und x- und/oder y-Kräfte nicht aufgenommen werden, d.h. die Bandeinheit ist gleitend gelagert. Diese erfindungsgemäße Entkoppelung der Kräfte, d.h. z-Kräfte werden vom Rahmen direkt aufgenommen und x- und/oder y-Kräfte werden über das Verbindungslager in die Plattform geleitet, erhöht die Messgenauigkeit der Windkanalwaage.

Die schwimmende Lagerung der Windkanalwaage kann eine relative Bewegung der Bandeinheit gegenüber dem Rahmen in x- und y-Richtung erlauben.

Weiterhin kann das zumindest eine Verbindungslager der Windkanalwaage ein hydrostatisches und/oder pneumatisches Lager sein. Dabei kann zumindest ein Führungszapfen im Wesentlichen reibungsfrei in zumindest einer Führungsaufnahme angeordnet sein.

Hydrostatisches Lager sind beispielsweise alle Lagertypen, die mittels Öl- oder Wasserdruck eine im Wesentlichen reibungsfreie Lagerung ermöglichen. Pneumatische Lager umfassen z.B. Luftdrucklager.

Der Führungszapfen (-kolben, -Stange oder -mittel) gleitet reibungsfrei in der Führungsaufnahme und wird z.B. hydraulisch oder pneumatisch in z-Richtung positioniert. Die Führungsaufnahme kann je nach Form des Führungszapfens und je nach geforderter Kraftübertragungsrichtung gestaltet sein. Bei einem im Wesentlichen zylindrischen Führungszapfen und einer gewünschten Kraftübertragung zwischen Bandeinheit und Plattform in x- und y-Richtung kann die Führungsaufnahme bevorzugt im Wesentlichen eine zylindrische Bohrung oder Aussparung sein.

Ferner kann das zumindest eine Verbindungslager eine Übertragung von Kräften in x-Richtung von der Bandeinheit auf die Plattform zulassen und die Plattform und den Rahmen in y- und in z-Richtung im Wesentlichen reibungsfrei verbinden. Dies ermöglicht Messungen, bei denen im Wesentlichen x-Kräfte von Interesse sind.

Ferner kann die Windkanalwaage zumindest ein X-Kraftmessmittel, zumindest ein Y-Kraftmessmittel und/oder ein Z-Kraftmessmittel aufweisen - jeweils angeordnet zwischen der Plattform und dem Rahmen.

Das zumindest eine X-Kraftmessmittel kann derart angeordnet sein, dass eine Kraft in x-Richtung zwischen der Plattform und dem Rahmen erfassbar ist.

Das zumindest eine Y-Kraftmessmittel kann derart angeordnet sein, dass eine Kraft in y-Richtung zwischen der Plattform und dem Rahmen erfassbar ist.

Das zumindest eine Z-Kraftmessmittel kann derart angeordnet sein, dass eine Kraft in z-Richtung zwischen der Plattform und dem Rahmen erfassbar ist.

Die Kraftmessmittel können beispielsweise eine kleine Relativbewegung zwischen der Plattform und dem Rahmen als Wegänderung erfassen und als Kraftwert ausgeben.

Somit wird die Erfassung von Kräften separat für jede Messrichtung ermöglicht. Die Kraftwerte können z.B. an eine Auswerteeinheit - Computer - weitergeleitet werden.

Die Kraftmessmittels (oder Krafterfassungsmittel) können z.B. Kraftmessdosen sein, die auf Basis von Dehnmessstreifen, piezoelektisch oder piezoresistiv eine Wegänderung, Dehnung, Stauchung, Spannung und/oder Druck in ein elektrisches Kraftsignal umwandeln.

Die Kraftmessmittel können jeweils zwischen zwei Knickstäben angeordnet sein, so dass lediglich Kräfte normal zur Knickstabrichtung auf die Kraftmessmittel geleitet werden. Die Knickstäbe können z.B. Ausformungen/Kerbungen aufweisen, die beispielsweise um 90° zueinander verdreht angeordnet sind, um im Wesentlichen nur Kräfte in Normalenrichtung zur Stabachse auf die Kraftmessdose zu leiten.

Ferner kann die Windkanalwaage zumindest ein Ventilationsverlust-Kraftmessmittel aufweisen. Das Ventilationsverlust-Kraftmessmittel kann zwischen der Bandeinheit und der Plattform derart angeordnet sein, dass eine Kraft zwischen der Plattform und der Bandeinheit in x-Richtung erfassbar ist, so dass ein Ventilationsverlust der Fahrzeugräder separat erfassbar ist.

Die Ventilationsverluste können beispielsweise durch eine Erfassung einer kleinen Relativbewegung zwischen Bandeinheit und Plattform isoliert bzw. separat ausgewertet bzw. erfasst werden, so dass die Messgenauigkeit der gesamten Windkanalwaage weiter erhöht wird.

Das Ventilationsverlust-Kraftmessmittel ist bevorzugt zusätzlich zu den X-, Y- und Z-Kraftmessmitteln an der Plattform angeordnet.

Ferner kann die Windkanalwaage zumindest ein Wiegepad aufweisen, das unterhalb eines Obertrums des zumindest einen Laufbandes angeordnet ist. Das Wiegepad kann derart angeordnet sein, dass das Fahrzeug, wenn es auf dem Laufband fixiert ist, mit den Fahrzeugrädern oberhalb des zumindest einen Wiegepads auf dem Laufband aufsteht. Weiterhin kann das zumindest eine Wiegepad Kräfte in z-Richtung, insbesondere die Gewichtskraft des Fahrzeuges und Auf- und/oder Abtriebskräfte, erfassen.

Durch die Wiegepads werden die Radaufstandskräfte erfasst und nach deren Aufsummierung die Summe der z-Kräfte, d.h. Fahrzeuggewichtskraft, Auftriebs-und Abtriebskräfte und parasitäre Kräfte in z-Richtung. Weiterhin können durch ein Erfassen einer Auslenkung der Wiegepads aus der Nulllage zusätzliche Momente um die x- und/oder y-Achse erfasst werden.

Wiegepad bezeichnet hier jegliche Messeinrichtung, die zum Messen von z-Kräften herangezogen werden kann, insbesondere für Durchbandmessungen. Bevorzugt wird je Fahrzeugrad je ein Wiegepad vorgesehen, d.h. in der Regel sind vier Wiegepads vorgesehen.

Ferner kann die Befestigungseinrichtung das Fahrzeug auf dem Laufband in einer festen Position oberhalb des zumindest einen Wiegepads festhalten. Die Befestigungseinrichtung kann das Fahrzeug ferner derart fixieren, dass Kräfte in x-, y- und/oder z-Richtung vom Fahrzeug über die Befestigungseinrichtung auf die Plattform übertragbar sind.

Dies ermöglicht, dass parasitäre Kräfte in x- und y-Richtung als innere Kräfte auftreten, die nicht von den Kraftmessmitteln erfasst werden, d.h. diese parasitären Kräfte führen nicht zu einer Messwertverfälschung.

Ferner kann die Windkanalwaage mittels des zumindest einen Z-Kraftmessmittels parasitäre z-Kräfte separat erfassen, die über die Befestigungseinrichtung und die Plattform an die Z-Kraftmessmittel übertragen werden.

Dies ermöglicht, dass parasitäre z-Kräfte, die in den Messwerten der Wiegepads enthalten sind, gesondert erfasst werden können, nämlich mit den Z-Kraftmessmitteln. Die Z-Kraftmessmittel zeigen nur die parasitären z-Kräfte an, so dass diese mit dem im Wiegepad erfassten Kraftwert verrechnet werden können. Die verrechneten Kraftwerte bilden die reale Messsituation somit genauer ab.

Ferner kann die Windkanalwaage eine, drei oder fünf Bandeinheiten aufweisen. Dies ist ein Vorteil hinsichtlich einer möglichen flexiblen Anwendung des erfindungsgemäßen Konzeptes auf Mehrbandsysteme, z.B. Drei- oder Fünfbandsysteme. Sogar eine Umrüstbarkeit zwischen den einzelnen Systemen ist möglich.

Zusammenfassend hat die erfindungsgemäße Windkanalwaage speziell den Vorteil, dass eine erhöhte Messgenauigkeit erreicht wird, da parasitäre z-Kräfte separat erfassbar sind und die beträchtliche Gewichtskraft der Windkanalwaage auf gesonderten Lagern abgeleitet wird, d.h. nicht über die Plattform.

Die Erfindung wird im Folgenden exemplarisch mit Bezug auf die beigefügten, schematischen Zeichnungen beschrieben. Es zeigen
Figur 1 eine Skizze einer Seitenansicht der erfindungsgemäßen Windkanalwaage gemäß Beispiel 1,
Figur 2 eine Skizze einer Draufsicht der erfindungsgemäßen Windkanalwaage gemäß Beispiel 1,
Figur 3 eine Skizze einer Seitenansicht der erfindungsgemäßen Windkanalwaage gemäß Beispiel 2 und
Figur 4 eine Skizze einer Draufsicht der erfindungsgemäßen Windkanalwaage gemäß Beispiel 2.

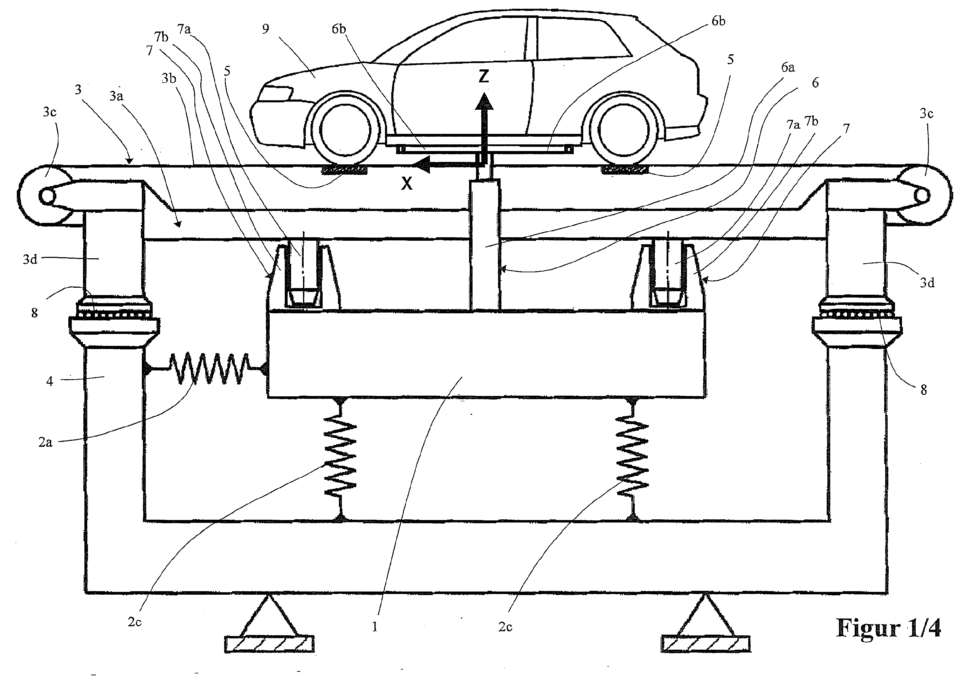

Figur 1 zeigt ein bevorzugtes Beispiel der erfindungsgemäßen Windkanalwaage. Es wird eine Plattform (1) verwendet, die nur im Hinblick auf die x- und y-Richtung kraftschlüssig mit der Bandeinheit (3) bzw. einem Bandeinheitsrahmen (3a) mittels eines Verbindungslagers (7) verbunden bzw. gekoppelt ist. Die Kräfte in z-Richtung werden über (im Wesentlichen) reibfreie Lager (8), z.B. Schwimm- bzw. Gleitlager, ausgeleitet. Die reibfreien Lager (8) können auch als Knicklager ausgebildet sein, d.h. die Lager bestehen dann aus Stangen- bzw. säulenförmigen Trägern, die zwei um beispielsweise 90° zueinander in axialer Richtung verdrehte Querschnittsverjüngungen (Kerbungen, Aussparungen) aufweisen. Es können auch mehr als zwei Querschnittsverjüngungen je Träger vorgesehen sein.

Figur 1 zeigt, dass ein Bandeinheitsrahmen (3a) der Bandeinheit (3) zwei Rollen (3c) drehbar gelagert hält. Um diese Rollen (3c) herum ist ein durchgehendes Laufband (3b) angeordnet (geschlungen), dass beispielsweise durch eine Drehbewegung der Rollen (3c) in Bewegung versetzt werden kann. Der Bandeinheitsrahmen (3a) weist Standelemente (3d) auf, die das Gewicht der Bandeinheit (3) tragen und sich gegen einen Rahmen (4) über je zumindest ein Schwimmlager (8) abstützen. Somit wird die Gewichtskraft der Bandeinheit (3) und des ggf. aufstehenden Kraftfahrzeugs (9) in den Rahmen (4) abgeleitet. Weiterhin kann der Rahmen (4) drehbar um die z-Achse zu seiner Umgehung gelagert sein (nicht gezeigt).

Die Plattform (1) ist beispielsweise eine Einheit, die mittig in dem Rahmen (4) angeordnet ist. Die in Figur 1 gezeigten Abstände zwischen der Plattform (1) und dem Rahmen (4) dienen der besseren Veranschaulichung, d.h. es können sehr viel kleinere oder größere Abstände vorgesehen sein. Die Formgebung der Plattform (1) kann wie in Figur 1 gezeigt plattenartig mit rechteckiger Grundform sein. Eine komplexere Form der Plattform (1) ist jedoch auch erfindungsgemäß. Die Plattform (1) muss nicht notwendigerweise plattenförmig gestaltet sein.

Weiter ist aus Figur 1 ersichtlich, dass zwei Verbindungslager (7) die Kopplung der x- und y-Bewegung zwischen der Bandeinheit (3) bzw. dessen Bandeinheitsrahmen (3a) und der Plattform (1) ermöglichen. Figur 1 zeigt, dass die Verbindungslager (7) bandeinheitsseitig montierte Führungskolben (7a) aufweisen, die in zugehörige Führungsaufnahmen (7b) eingreifen, die auf der Plattform (1) montiert sind. Die Führungskolben (7a) gleiten (im Wesentlichen) reibungsfrei innerhalb der Führungsaufnahmen in z-Richtung, d.h. auf und ab. Eine Lagerung in z-Richtung ist beispielsweise hydraulisch oder pneumatisch ausgeführt, so dass keine bzw. im Wesentlichen keine Kräfte in z-Richtung von der Bandeinheit (3) auf die Plattform (1) übertragen werden. Hingegen wird durch den formschlüssigen Eingriff der Führungskolben (7a) in der bevorzugt gegenförmigen, hier zylindrischen, Führungsaufnahme (7b) ermöglicht, dass x-und y-Bewegungen der Bandeinheit (3) bzw. dessen Bandeinheitsrahmen (3a) auf die Plattform (1) weitergegeben werden/übertragen werden.

Die Plattform (1) ist über Z-Kraftmessmittel (2c) - gezeigt sind lediglich zwei, jedoch werden besonders drei oder vier bevorzugt - in Richtung der Hochachse (z-Richtung) im Rahmen (4) gelagert. Erfasste Kräfte können z.B. mittels einer Auswerteeinheit (nicht dargestellt) dargestellt werden.

Die Kräfte längs zur Fahrachse (x-Kräfte) werden mit zumindest einem X-Kraftmessmittel (2a) erfasst, dass in Figur 1 zwischen einem in x-Richtung vorderen Ende der Plattform (1) und einem Abschnitt des Rahmens (4) angeordnet ist.

Die Kräfte quer zur Fahrachse (y-Kräfte) werden mit zumindest einem, bevorzugt zwei, Y-Kraftmessmittel (2b) erfasst/gemessen. Es können zwei Y-Kraftmessmittel vorgesehen sein, die seitlich an der Plattform (1) angeordnet und in x-Richtung zueinander beabstandet sind. Das Gegenende der Y-Kraftmessmittel (2b) ist fest mit dem Rahmen (4) verbunden.

Schematisch sind in den Figuren alle Kraftmessmittel (2) als Federelemente gezeigt. In der realen Anordnung werden bevorzugt Kraftmessdosen oder Dehnmessstreifen (bzw. in Kraftmessdosen integrierte Dehnmessstreifen) verwendet (andere Kraftmesseinrichtungen sind jedoch auch möglich), die mittig in einem bzw. zwischen zwei Knickstäben oder Säulen angeordnet sind. Eine alternative Befestigung bzw. Anordnung der Kraftmessmittel ist selbstverständlich auch möglich.

Außerdem zeigt Figur 1, dass die Plattform (1) fest mit zumindest zwei (bspw. aber auch drei oder mehr) ersten Befestigungsmitteln (6a) (Befestigungsstützen) einer Befestigungseinrichtung (6) (Restraintsystem) verbunden ist. Die beiden Befestigungsstützen (6a) stehen in z-Richtung bevorzugt senkrecht jeweils seitlich zum Laufband (3b) in hinsichtlich der x-Richtung bevorzugt mittiger Lage der Windkanalwaage auf der Plattform (1). Die Befestigungsstützen (6a) sind fest mit der Plattform (1) verbunden. Weiterhin zeigt Figur 1, dass die in z-Richtung oberen Enden der Befestigungsstützen (6a) über die z-Höhe des Obertrums des Laufbandes (3b) überstehen. Bevorzugt im überstehenden Endabschnitt der Befestigungsstützen (6a) ist zumindest ein zweites Befestigungsmittel (6b) befestigt. Das zweite Befestigungsmittel (6b) ist bevorzugt ein Seil, ein Gurt, eine sehr dünne Stange oder eine Anordnung aus verschiedenen Komponenten wie Seilen, Gurten, etc. und kann am Ende, das zum Fahrzeug (9) hin angeordnet ist, eine Schwellerstütze aufweisen. Bevorzugt sind zumindest für jede Fahrzeugseite (in y-Richtung) zwei zweite Befestigungsmittel (6b) vorgesehen, die mittels Schwellerstützen an entsprechenden Aufnahmen am Kraftfahrzeug (9) angeordnet sind. Die zweiten Befestigungsmittel (6b) halten das Fahrzeug (9) in einer vorbestimmten Position auf dem (relativ zum) Laufband (3b) fest. An den Seilen auftretende x-/y-Kräfte werden über die Seile (6b) ausgeleitet und wirken lediglich als innere Kräfte, d.h. diese Kräfte werden an den Kraftmessmitteln (2a, 2b) nicht erfasst.

Werden die zweiten Befestigungsmittel (6b) beispielsweise nicht exakt in der Horizontalen geführt, so ergeben sich parasitäre z-Kräfte, die von zumindest einem Wiegepad (5) unterhalb des Obertrums des Laufbands (3b) erfasst werden. Weiterhin werden diese parasitären z-Kräfte auch gesondert/separat über die Befestigungseinrichtung (6) an die Z-Kraftmessmittel (2c) geleitet. Dies ermöglicht eine Verrechnung/Korrektur der gemessenen z-Kräfte an dem Wiegepad (5) und an den Z-Kraftmessmitteln (2c) und damit eine erhöhte Messgenauigkeit.

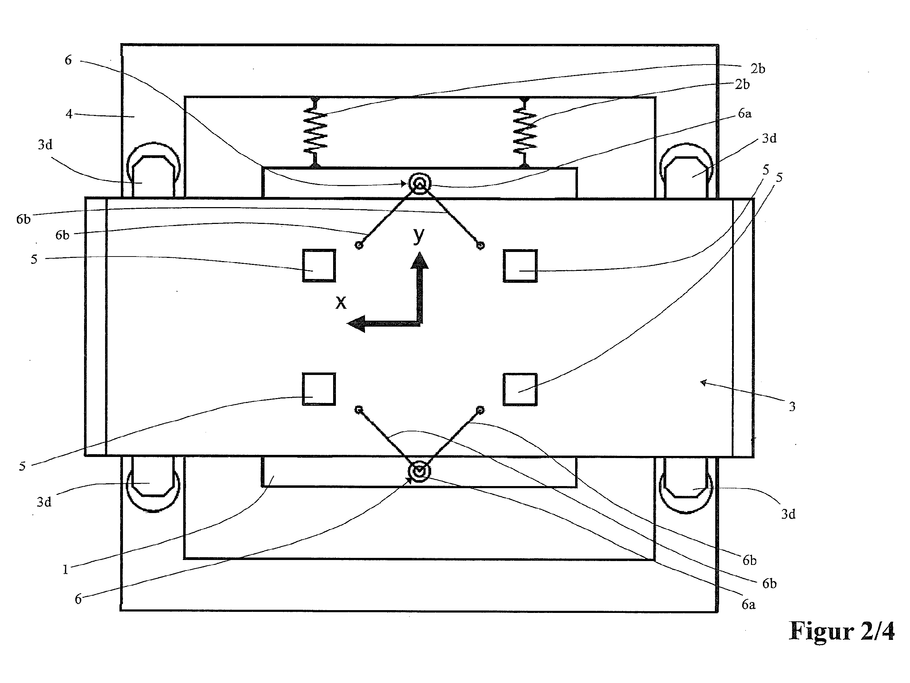

Figur 2 zeigt schematisch das Beispiel nach Figur 1 in der Draufsicht. Aus der Darstellung in Figur 2 wird ersichtlich, dass eine einseitige Anordnung von Y-Kraftmessmitteln (2b) ausreichend ist, um eine genaue Messung vornehmen zu können. Ferner ergibt sich daraus, dass die Plattform (1) seitlich (in y-Richtung) jeweils zumindest soweit über die äußere seitliche Kante des Laufbandes (3b) übersteht, dass auf den überstehenden Abschnitten die Befestigungsstützen (6a) Platz finden.

Weiterhin zeigt Figur 2 auch die Anordnung der Plattform (1), die mittig bzw. im Wesentlichen zentriert, im Rahmen (4) angeordnet ist.

Unterhalb des Laufbandes (3b), in Figur 2 mittels Quadraten angezeigt, sind Wiegepads (5) angeordnet, auf denen die Fahrzeugräder angeordnet werden. Das Fahrzeug (9) ist in Figur 2 nicht dargestellt. Die Wiegepads (5) erfassen mittels Durchbandmessung eine Gewichtskraft, d.h. hier eine z-Kraft, die verschiedene Komponenten aufweisen kann. So kann die mittels der Wiegepads (5) erfasste z-Kraft die Summe insbesondere aus der Gewichtskraft des Fahrzeugs (9), Auftriebskräften, Abtriebskräften und parasitären z-Kräften sein. Wie bereits mehrfach beschrieben lassen sich bei der erfindungsgemäßen Windkanalwaage die parasitären z-Kräfte getrennt ermitteln, so dass diese mit der an den Wiegepads (5) gemessenen z-Kräften verrechnet (korrigiert) werden können.

Ferner sind in Figur 2 die zweiten Befestigungsmittel (6b) gezeigt, deren Enden jeweils eine Aufnahme am Fahrzeugrahmen und das zugehörige erste Befestigungsmittel (6a) miteinander verbinden.

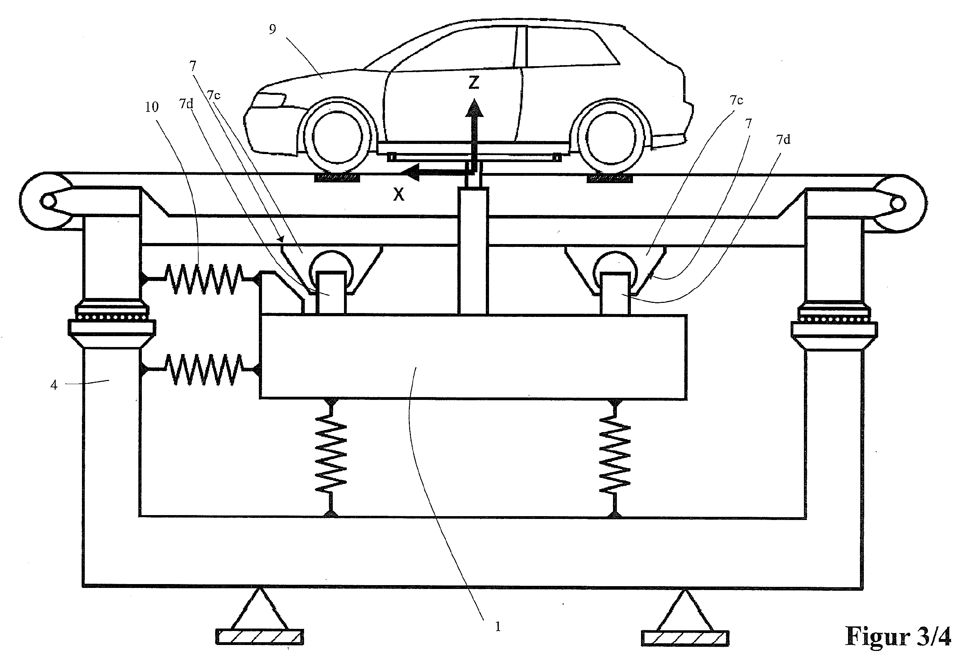

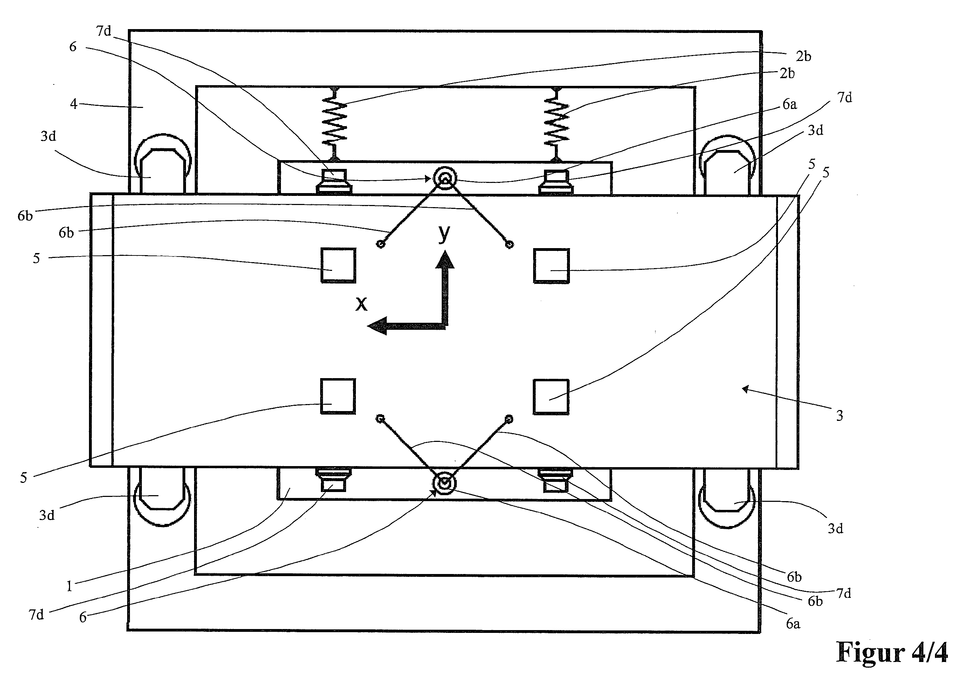

Bei einem weiteren Beispiel der erfindungsgemäßen Windkanalwaage (Figs. 3 und 4) wird die zumindest eine Bandeinheit (3) oder der Bandeinheitsrahmen (3a) oder das oder die Laufbänder (3b) über ein zusätzliches Kraftmessmittel (10) an der Plattform (1) angebunden. Dies ermöglicht die Separierung von an den Rädern auftretenden Kräften, wie z.B. Roll-, Walk- und/oder Ventilationsverluste, die an dem Ventilationsverlust-Kraftmessmittel (10) gemessen werden. Die weiteren aerodynamischen Kräfte stehen weiterhin an den Kraftmessmitteln (2a-2c) zur Verfügung. Konkret zeigt die Figur 3, dass an einem in x-Richtung vorderen Ende (jedoch ist auch eine andere Position möglich) der Plattform (1) das Ventilationsverlust-Kraftmessmittel (10) fest montiert ist. Das zweite Ende des Ventilationsverlust-Kraftmessmittels (10) ist im Unterschied zu den anderen Kraftmessmitteln (2a-2c) an der Bandeinheit (6) angeordnet. Hier an einem der Standelemente (3d). Somit kann beispielsweise eine Erfassung der Relativbewegung in x-Richtung zwischen der Plattform (1) und der Bandeinheit (3) möglich sein, die eine zusätzliche und separate Ermittlung der Ventilationsverluste an den Rädern des Fahrzeugs (9) ermöglicht. Diese Ventilationsverluste können beispielsweise mit den weiteren erfassten Kraftwerten verrechnet werden, um die Messgenauigkeit der Windkanalwaage zu erhöhen.

Weiterhin zeigt die Figur 3 zusammen mit der Figur 4 auch ein weiteres Beispiel des erfindungsgemäßen Verbindungslagers (7). Dabei sei angemerkt, dass das weitere Beispiel des Verbindungslagers (7) lediglich der Veranschaulichung dienend zusammen mit dem Beispiel des zusätzlichen Ventilationsverluste-Kraftmessmittels (10) gezeigt ist. Selbstverständlich kann auch das Beispiel nach Figur 1 das zusätzliche Ventilationsverluste-Kraftmessmittel (10) aufweisen.

Wie insbesondere in Figur 3 dargestellt ist, sind bandeinheitsseitig zwei Schienen (7c) fest montiert und in x-Richtung voneinander beabstandet angeordnet. Auf der Plattform (1) fest montiert greifen zwei Eingriffselemente (7d) jeweils seitlich in die Aufnahmeöffnungen der Schienen (7c) ein, so dass wie im Beispiel nach Figur 1 eine Kopplung der x-/y-Bewegungen möglich ist, jedoch in z-Richtung eine reibungsfrei Lagerung gegeben ist.

Selbstverständlich sind auch Beispiele bzw. Ausführungen der Windkanalwaage möglich, bei denen z.B. nur in x-Richtung oder nur in y-Richtung eine Bewegungskopplung realisiert ist und eine reibungsfreie Lagerung in z-Richtung und x- bzw. y-Richtung vorgesehen ist.

Zusammenfassend hat die erfindungsgemäße Windkanalwaage den Vorteil, dass parasitäre Kräfte in z-Richtung durch die Befestigungsvorrichtung (6) an die Z-Kraftmessmittel (2c) leitbar sind und von diesen isoliert messbar sind. Dadurch können die Messwerte der Wiegepads (5) korrigiert werden und genauere Messungen durchgeführt werden. Die Messgenauigkeit wird weiterhin dadurch erhöht, dass die Gewichtskraft der Windkanalwaage über die Schwimmlager (8) ausgeleitet wird und diese somit nicht auf der Plattform (1) lastet.

Die gezeigten Beispiele können insofern beliebig miteinander kombiniert werden als es für einen Fachmann naheliegend gewesen wäre.
- 1: Plattform
- 2: Kraftmessmittel
- 2a: X-Kraftmessmittel
- 2b: Y-Kraftmessmittel
- 2c: Z-Kraftmessmittel
- 3: Bandeinheit
- 3a: Bandeinheitsrahmen
- 3b: Laufband
- 3c: Rolle
- 3d: Standelernente
- 4: Rahmen (der Windkanalwaage)
- 5: Wiegepad
- 6: Befestigungseinrichtung
- 6a: Erstes Befestigungsmittel (seitliche Stützen)
- 6b: Zweites Befestigungsmittel (Gurte, Seile, etc.)
- 7: Verbindungslager
- 7a: Führungszapfen/Mitnehmerbolzen
- 7b: Führungsaufnahme
- 7c: Schiene
- 7d: Eingriffselement
- 8: Schwimm/-Gleitlager
- 9: (Kraft-)Fahrzeug
- 10: Ventilationsverluste-Kraftmessmittel

## Patentansprüche

1. Windkanalwaage mit
- zumindest einer Bandeinheit (3), die zumindest einen Bandeinheitsrahmen (3a) aufweist, an dem zumindest ein Laufband (3b) angeordnet ist, das um zumindest zwei Rollen (3c) geschlungen ist, und
die Windkanalwaage weiter umfasst
- zumindest eine Befestigungseinrichtung (6), die dazu geeignet ist, ein Fahrzeug (9) in einer vorbestimmten Position auf dem Laufband (3b) festzuhalten,
- einen Rahmen (4) und
- eine Plattform (1), die relativ bewegbar zum Rahmen (4) gelagert ist, wobei
Kraftmessmittel (2) zwischen dem Rahmen (4) und der Plattform (1) angeordnet sind, mit denen Kräfte zwischen Rahmen (4) und Plattform (1) erfassbar sind, und
die Befestigungseinrichtung (6) mit der Plattform (1) in Verbindung steht, wobei
die zumindest eine Bandeinheit (3) im Wesentlichen reibungsfrei auf dem Rahmen (4) gelagert ist, und
die Plattform (1) mit der zumindest einen Bandeinheit (3) mittels zumindest eines Verbindungslagers (7) derart gekoppelt ist, dass Kräfte in x-und/oder y-Richtung von der Bandeinheit (3) auf die Plattform (1) übertragbar sind, **gekennzeichnet dadurch, dass**
das Verbindungslager (7) die Plattform (1) und die Bandeinheit (3) in z-Richtung im Wesentlichen reibungsfrei verbindet.

2. Windkanalwaage nach Anspruch 1 **gekennzeichnet dadurch, dass** die Bandeinheit (3) mittels einer schwimmenden Lagerung (8) auf dem Rahmen (4) im Wesentlichen reibungsfrei gelagert ist.

3. Windkanalwaage nach zumindest einem der vorangegangenen Ansprüche **gekennzeichnet dadurch, dass** die schwimmende Lagerung (8) eine relative Bewegung der Bandeinheit (3) gegenüber dem Rahmen (4) in x- und y-Richtung erlaubt.

4. Windkanalwaage nach zumindest einem der vorangegangenen Ansprüche **gekennzeichnet dadurch, dass** das zumindest eine Verbindungslager (7) ein hydrostatisches und/oder pneumatisches Lager ist,
wobei zumindest ein Führungszapfen (7a) im Wesentlichen reibungsfrei in zumindest einer Führungsaufnahme (7b) angeordnet ist.

5. Windkanalwaage nach zumindest einem der vorangegangenen Ansprüche **gekennzeichnet dadurch, dass** das zumindest eine Verbindungslager (7) eine Übertragung von Kräften in x-Richtung von der Bandeinheit (3) auf die Plattform (1) zulässt und das Verbindungslagers (7) die Plattform (1) und den Bandeinheitsrahmen (3a) in y- und in z-Richtung im Wesentlichen reibungsfrei verbindet.

6. Windkanalwaage nach zumindest einem der vorangegangenen Ansprüche **gekennzeichnet dadurch, dass** zumindest ein X-Kraftmessmittel (2a), zumindest ein Y-Kraftmessmittel (2b) und/oder ein Z-Kraftmessmittel (2c) zwischen der Plattform (1) und dem Rahmen (4) angeordnet ist, wobei
das zumindest eine X-Kraftmessmittel (2a) derart angeordnet ist, dass eine Kraft in x-Richtung zwischen der Plattform (1) und dem Rahmen (4) erfassbar ist,
das zumindest eine Y-Kraftmessmittel (2a) derart angeordnet ist, dass eine Kraft in y-Richtung zwischen der Plattform (1) und dem Rahmen (4) erfassbar ist und
das zumindest eine Z-Kraftmessmittel (2a) derart angeordnet ist, dass eine Kraft in z-Richtung zwischen der Plattform (1) und dem Rahmen (4) erfassbar ist.

7. Windkanalwaage nach zumindest einem der vorangegangenen Ansprüche **gekennzeichnet dadurch, dass** zumindest ein Ventilationsverlust-Kraftmessmittel (10) vorgesehen ist, das zwischen der Bandeinheit (3) und der Plattform (1) derart angeordnet ist, dass eine Kraft zwischen der Plattform (1) und der Bandeinheit (3) in x-Richtung erfassbar ist, so dass ein Ventilationsverlust der Fahrzeugräder separat erfassbar ist.

8. Windkanalwaage nach zumindest einem der vorangegangenen Ansprüche **gekennzeichnet dadurch, dass** zumindest ein Wiegepad (5) unterhalb eines Obertrums des zumindest einen Laufbandes (3b) angeordnet ist, wobei
das Wiegepad (5) derart angeordnet ist, dass das Fahrzeug (9), wenn es auf dem Laufband (9) fixiert ist, mit den Fahrzeugrädern oberhalb des zumindest einen Wiegepads (5) auf dem Laufband (3b) aufsteht, und wobei
das zumindest eine Wiegepad (5) Kräfte in z-Richtung, insbesondere die Gewichtskraft des Fahrzeuges (9) und Auf- und/oder Abtriebskräfte, erfasst.

9. Windkanalwaage nach zumindest einem der vorangegangenen Ansprüche **gekennzeichnet dadurch, dass** die Befestigungseinrichtung (6) das Fahrzeug (9) auf dem Laufband (3b) in einer festen Position oberhalb des zumindest einen Wiegepads (5) festhält und
die Befestigungseinrichtung (6) das Fahrzeug (9) derart fixiert, dass Kräfte in x-, y- und/oder z-Richtung vom Fahrzeug (9) über die Befestigungseinrichtung (6) auf die Plattform (1) übertragbar sind.

10. Windkanalwaage nach zumindest einem der vorangegangenen Ansprüche **gekennzeichnet dadurch, dass** mittels des zumindest einen Z-Kraftmessmittels (2c) parasitäre Kräfte in z-Richtung (z-Kräfte) separat erfassbar sind, die über die Befestigungseinrichtung (6) und die Plattform (1) an die Z-Kraftmessmittel (2c) übertragen werden.

11. Windkanalwaage nach zumindest einem der vorangegangenen Ansprüche umfassend eine, drei, fünf oder sieben Bandeinheiten (3).

## Claims

1. A wind tunnel balance comprising:
- at least one belt unit (3) including at least one belt unit frame (3a), on which at least one moving belt (3b) is arranged, which is wound around at least two rollers (3c), and
said wind tunnel balance further comprising
- at least one fastening device (6) adapted to hold a vehicle (9) in a predetermined position on said moving belt (3b)
- a frame (4) and
- a platform (1) mounted movably with respect to said frame (4),
wherein
a force measuring means (2) is arranged between said frame (4) and said platform (1), by which forces between said frame (4) and said platform (1) are detectable, and
said fastening device (6) is in connection to said platform (1), said at least one belt unit (3) is mounted on said frame (4) sub-stantially frictionlessly, and
said platform (1) is coupled to said at least one belt unit (3) by means of at least one connecting bearing (7) such that forces in x-and/or y-direction of said belt unit (3) are transmittable to said platform (1), **characterized in that**
said connecting bearing (7) connects said platform (1) and said belt unit (3) substantially frictionlessly in z-direction.

2. The wind tunnel balance according to claim 1, **characterized in that** said belt unit (1) is mounted on said frame substantially friction-lessly by means of a floating bearing (8).

3. The wind tunnel balance according to at least one of the preceding claims, **characterized in that** said floating bearing (8) allows for a relative movement of said belt unit (3) with respect to said frame (4) in x- and y-direction.

4. The wind tunnel balance according to at least one of the preceding claims, **characterized in that** said at least one connecting bearing (7) is a hydrostatic and/or pneumatic bearing,
wherein at least one guide pin (7a) is arranged substantially frictionlessly in at least one guide socket (7b).

5. The wind tunnel balance according to at least one of the preceding claims **characterized in that** said at least one connecting bearing (7) allows for a transmission of forces in x-direction of said belt unit (3) to said platform (1) and said connecting bearing (7) connects said platform (1) and said belt unit frame (8a) substantially frictionlessly in y- and z-directions.

6. The wind tunnel balance according to at least one of the preceding claims, **characterized in that** at least one x-force measuring means (2a), at least one y-force measuring means (2b) and/or one z-force measuring means (20) are arranged between said platform (1) and said frame (4), wherein
said at least one x-force measuring means (2a) is arranged such that a force in x-direction between said platform (1) and said frame (4) is detectable,
said at least one y-force measuring means (2a) is arranged such that a force in y-direction between said platform (1) and said frame (4) is detectable, and
said at least one z-force measuring means (2a) is arranged such that a force in z-direction between said platform (1) and said frame (4) is detectable.

7. The wind tunnel balance according to at least one of the preceding claims **characterized in that** at least one ventilation loss force measuring means (10) is provided, which is arranged between said belt unit (3) and said platform (1) such that a force between said platform (1) and said belt unit (3) in x-direction is detectable such that a ventilation loss of the vehicle wheels is separately detectable.

8. The wind tunnel balance according to at least one of the preceding claims **characterized in that** at least one rocker pad (5) is located underneath an upper run of said at least one moving belt (3b), wherein
said rocker pad (5) is arranged such that said vehicle (9), when it is fixed to said moving belt (9), rests on said moving belt (3b) with the vehicle wheels on top of said at least one rocker pad (5), and wherein
said at least one rocker pad (5) detects forces in z-direction, in particular the weight force of said vehicle (9) as well as lift forces and/or negative lift forces.

9. The wind tunnel balance according to at least one of the preceding claims, **characterized in that** said fastening device (6) holds said vehicle (9) on said moving belt (3b) in a fixed position above said at least one rocker pad (5) and
said fastening device (6) fixes said vehicle (9) such that forces in x-, y- and/or z-direction of said vehicle (9) are transmittable to said platform (1) via said fastening device (6).

10. The wind tunnel balance according to at least one of the preceding claims, **characterized in that** by means of said at least one z-force measuring means (2c) parasitic forces in z-direction (z-forces) are separately detectable, which are transmittable to said z-force measuring means (20) via said fastening device (6) and said platform (1).

11. The wind tunnel balance according to at least one of the preceding claims comprising one, three, five or seven belt units (3).

## Revendications

1. Balance de soufflerie aérodynamique comportant
- au moins un ensemble à tapis (3) qui comprend au moins un cadre d'ensemble à tapis (3a) sur lequel est agencé au moins un tapis défilant (3b) enroulé autour d'au moins deux rouleaux (3c) et
la balance de soufflerie aérodynamique comprenant en outre
- au moins un dispositif de fixation (6) apte à retenir un véhicule (9) dans une position prédéterminée sur le tapis défilant (3b),
- un cadre (4) et
- une plate-forme (1) montée mobile par rapport au cadre (4),
des moyens de mesure de force (2) étant agencés entre le cadre (4) et la plate-forme (1), permettant de détecter les forces agissant entre le cadre (4) et la plate-forme (1), et
le dispositif de fixation (6) étant en liaison avec la plate-forme (1),
ledit au moins un ensemble à tapis (3) étant monté sur le cadre (4) de façon sensiblement exempte de friction, et
la plate-forme (1) étant couplée audit au moins un ensemble à tapis (3) au moyen d'un au moins palier de liaison (7) de telle sorte que les forces en direction x et/ou en direction y sont transmissibles de l'ensemble à tapis (3) à la plate-forme (1),
**caractérisée en ce que**
le palier de liaison (7) relie la plate-forme (1) et l'ensemble à tapis (3) de façon sensiblement exempte de friction en direction z.

2. Balance de soufflerie aérodynamique selon la revendication 1, **caractérisée en ce que** l'ensemble à tapis (3) est monté sur le cadre (4) de façon sensiblement exempte de friction au moyen d'un montage flottant (8).

3. Balance de soufflerie aérodynamique selon l'une au moins des revendications précédentes, **caractérisée en ce que** le montage flottant (8) permet un mouvement relatif de l'ensemble à tapis (3) par rapport au cadre (4) en direction x et y.

4. Balance de soufflerie aérodynamique selon l'une au moins des revendications précédentes, **caractérisée en ce que** ledit au moins un palier de liaison (7) est un palier hydrostatique et/ou pneumatique,
un tourillon de guidage (7a) étant agencé de façon sensiblement exempte de friction dans un moins un logement de guidage (7b).

5. Balance de soufflerie aérodynamique selon l'une au moins des revendications précédentes, **caractérisée en ce que** ledit au moins un palier de liaison (7) admet une transmission de forces en direction x de l'ensemble à tapis (3) à la plate-forme (1), et le palier de liaison (7) relie la plate-forme (1) et le cadre d'ensemble à tapis (3a) de façon sensiblement exempte de friction en direction y et z.

6. Balance de soufflerie aérodynamique selon l'une au moins des revendications précédentes, **caractérisée en ce qu'**au moins un moyen de mesure de force X (2a), au moins un moyen de mesure de force Y (2b) et/ou un moyen de mesure de force Z (2c) est agencé entre la plate-forme (1) et le cadre (4),
ledit au moins un moyen de mesure de force X (2a) étant agencé de manière à permettre de détecter une force-en direction x entre la plate-forme (1) et le cadre (4),
ledit au moins un moyen de mesure de force Y (2a) étant agencé de manière à permettre de détecter une force en direction y entre la plate-forme (1) et le cadre (4), et
ledit au moins un moyen de mesure de force Z (2a) étant agencé de manière à permettre de détecter une force en direction z entre la plate-forme (1) et le cadre (4).

7. Balance de soufflerie aérodynamique selon l'une au moins des revendications précédentes, **caractérisée en ce qu'**il est prévu au moins un moyen de mesure (10) des pertes par ventilation qui est agencé entre l'ensemble à tapis (3) et la plate-forme (1) de manière à permettre de détecter une force en direction x entre la plate-forme (1) et l'ensemble à tapis (3), de manière à permettre de détecter séparément des pertes par ventilation des roues du véhicule.

8. Balance de soufflerie aérodynamique selon l'une au moins des revendications précédentes, **caractérisée en ce qu'**au moins un pavé de pesée (5) est agencé au-dessous d'un brin supérieur dudit au moins un tapis défilant (3b),
le pavé de pesée (5) étant agencé de telle sorte que le véhicule (9), une fois fixé sur le tapis défilant (9), a ses roues posées au-dessus dudit au moins un pavé de pesée (5) sur le tapis défilant (3b), et
ledit au moins un pavé de pesée (5) détectant les forces en direction z, en particulier le poids du véhicule (9) et des forces ascensionnelles et/ou descensionnelles.

9. Balance de soufflerie aérodynamique selon l'une au moins des revendications précédentes, **caractérisée en ce que** le dispositif de fixation (6) retient le véhicule (9) sur le tapis défilant (3b) dans une position fixe au-dessus dudit au moins un pavé de pesée (5), et
le dispositif de fixation (6) fixe le véhicule (9) de manière à permettre de transmettre des forces en direction x, y et/ou z du véhicule (9) à la plate-forme (1) via le dispositif de fixation (6).

10. Balance de soufflerie aérodynamique selon l'une au moins des revendications précédentes, **caractérisée en ce que** ledit au moins un moyen de mesure de force Z (2c) permet de détecter séparément des forces parasites en direction z (forces z) qui sont transmises aux moyens de mesure de force Z (2c) via le dispositif de fixation (6) et via la plate-forme (1).

11. Balance de soufflerie aérodynamique selon l'une au moins des revendications précédentes, comprenant un, trois, cinq ou sept ensembles tapiss (3).
